# EUROPEAN PATENT APPLICATION

(11) **EP 4 841 808 A2**
(43) Date of publication of application: **18.11.2026**
(21) Application number: 26201498.8
(22) Date of filing: 27.08.2026
(51) Int. Cl.: H01M 50/538, B23K 11/14, B23K 11/30, B23K 101/38

(54) **WELDING SHEET FOR BATTERY WELDING AND WELDING DEVICE**

(30) Priority: 12.01.2026 CN 202610032381
(71) Applicant: Calowid (Changzhou) Intelligent Welding Equipment Co., Ltd., Changzhou, Jiangsu 213200 (CN)
(72) Inventor: YU, Chaoming, Changzhou, 213200 (CN); FANG, Xiangming, Changzhou, 213200 (CN)
(74) Representative: JD&P Patent Attorneys Joanna Dargiewicz & Partners

(57) **Abstract**

Provided are a welding sheet for battery welding and a welding device, which belong to the technical field of welding devices. The welding sheet for battery welding includes a base material made of a conductive material, where the base material is electrically connected to an electrode during welding; the base material is provided with a current guiding structure; the current guiding structure is configured to form a current path between multi-layer tabs or composite current collectors during welding; the base material is further provided with a temperature sensing assembly; and the temperature sensing assembly is configured to undergo a physical state change within a preset temperature range and output a temperature feedback signal. The welding sheet is configured for welding of battery tabs, and enables current conduction during welding via the current guiding structure that can reduce or eliminate contact resistance between the tabs (foils), thereby improving the welding quality of the tabs.

## Description

### TECHNICAL FIELD

The present disclosure relates to the technical field of welding devices, and in particular to a welding sheet for battery welding and a welding device.

### BACKGROUND

In recent years, with the rapid development of the new energy industry, especially the power battery and energy storage fields, higher requirements have been put forward for the performance and manufacturing process of key conductive components of batteries. As a new lightweight and high-strength conductive material, a composite current collector has been widely applied in fields such as lithium batteries due to its excellent electrical conductivity, favorable mechanical properties, and light weight. For example, it is used for positive and negative electrodes of lithium batteries. The composite current collector generally adopts a sandwich structure of "metal layer (such as copper or aluminum) + polymer substrate (such as polyethylene terephthalate (PET) / polypropylene (PP) / polyimide (PI)) + metal layer", with the intermediate polymer layer functioning as support and insulation.

However, this structure brings significant challenges to multi-layer welding of tabs. Conventional tab welding processes, such as ultrasonic spot welding, laser welding or resistance welding, all have obvious bottlenecks in dealing with multi-layer composite current collectors. In particular, resistance welding and its derived pressure fusion welding process are limited by the non-conductive intermediate polymer substrate of the composite current collector. The welding current cannot penetrate the insulating layer, such that an effective current path cannot be formed between the multi-layer tabs, making it difficult to achieve reliable integrated welding.

Therefore, there is a need to improve the existing welding method for composite current collectors so as to overcome the defects of the prior art.

### SUMMARY OF PRESENT INVENTION

To overcome the problems existing in the related art, a first objective of the present disclosure is to provide a welding sheet for battery welding. The welding sheet is configured for welding of battery tabs, and uses a current guiding structure that can reduce or eliminate contact resistance between the tabs (foils) to enable current conduction during welding, thereby improving the welding quality of the tabs.

A welding sheet for battery welding includes a base material made of a conductive material, where the base material is electrically connected to an electrode during welding;
the base material is provided with a protruding current guiding structure; the current guiding structure is configured to form a current path between multi-layer tabs or composite current collectors during welding; the base material is further provided with a temperature sensing assembly; and the temperature sensing assembly is configured to undergo a physical state change within a preset temperature range and output a temperature feedback signal.

In a preferred technical solution of the present disclosure, the current guiding structure is a post, a sphere or a taper protruding from a surface of the base material; and there is at least one post, sphere or taper disposed on the base material.

In a preferred technical solution of the present disclosure, the taper is a cone or a pyramid; and the taper has a height of 0.1-5 mm and a maximum bottom width of 0.3-5 mm.

In a preferred technical solution of the present disclosure, the temperature sensing assembly includes a temperature sensing material layer and a signal transmission member; and the temperature sensing material layer is made of a low-melting alloy or a thermochromic polymer material.

In a preferred technical solution of the present disclosure, a side of the temperature sensing material layer is connected to the current guiding structure, and an opposite side of the temperature sensing material layer is connected to the signal transmission member; the signal transmission member is a conductive coating; and a side of the signal transmission member abuts against the temperature sensing material layer, and an opposite side of the signal transmission member is electrically connected to an external welding device.

In a preferred technical solution of the present disclosure, a surface of the current guiding structure is provided with a rough texture; and the rough texture includes any one or a combination of a concentric circle type, a spiral type, a radial type, and a pit type.

A second objective of the present disclosure is to provide a welding device, including: a device body, where the device body is provided with a feeding mechanism, a transfer mechanism, a shaping mechanism, and a welding mechanism;
the feeding mechanism includes a vibrating feeding tray; and the vibrating feeding tray is configured to accommodate the welding sheet for battery welding;
the shaping mechanism is located on a side of the feeding mechanism and is configured to shape a battery tab; and
the transfer mechanism is configured to place the welding sheet on the welding mechanism, such that the welding mechanism welds the battery tab via the welding sheet.

In a preferred technical solution of the present disclosure, the welding mechanism includes a frame, a top electrode, a bottom electrode, and a driving structure; the frame is fixed to the device body; the bottom electrode is fixed to a side of the frame; the driving structure is disposed on the frame; the top electrode is disposed above the bottom electrode, the top electrode is fixedly connected to an output end of the driving structure; and the driving structure is configured to drive the top electrode to move vertically above the bottom electrode.

In a preferred technical solution of the present disclosure, the frame is further provided with a tab tape winding and unwinding mechanism; the tab tape winding and unwinding mechanism includes an unwinding tray, a winding tray, guiding structures, and end guiding rollers; the unwinding tray and the winding tray are disposed opposite to each other on two sides of the driving structure; there are two end guiding rollers; and the two end guiding rollers are disposed below the driving structure;
there are two guiding structures disposed on the frame; and the two guiding structures are respectively disposed between the unwinding tray and one end guiding roller and between the winding tray and the other end guiding roller; and
the unwinding tray is provided with a tab tape; and one end of the tab tape sequentially passes through one guiding structure, the two end guiding rollers, and the other guiding structure to extend into the winding tray.

In a preferred technical solution of the present disclosure, the device body is further provided with a battery moving mechanism; and the battery moving mechanism includes a driving system, a bearing plate, and a clamp; and
the driving system includes a first guide rail, a mounting base, a second guide rail, and a lifting driving cylinder; the first guide rail is disposed between the shaping mechanism and the welding mechanism; the mounting base is movably disposed on the first guide rail; the second guide rail is vertically fixed to the mounting base; the lifting driving cylinder is disposed on a side of the second guide rail; the bearing plate is disposed on the second guide rail; the clamp is detachably disposed on the bearing plate; and the lifting driving cylinder is configured to drive the bearing plate to move vertically along the second guide rail.

The present disclosure has the following beneficial effects.

The present disclosure provides a welding sheet for battery welding. The welding sheet includes a base material made of a conductive material, and the base material is electrically connected to an electrode during welding. The base material is provided with a current guiding structure. The current guiding structure is configured to form a current path between multi-layer tabs or composite current collectors during welding. The base material is further provided with a temperature sensing assembly. The temperature sensing assembly is configured to undergo a physical state change within a preset temperature range and output a temperature feedback signal. The welding sheet is configured for welding of battery tabs. During the welding of multi-layer metal foil tabs, a large number of microscopic gaps and oxide films exist between layers, forming substantial accumulated contact resistance. Current applied by conventional welding electrodes is severely hindered by these interface resistances and cannot flow uniformly and effectively through all interlayer interfaces, resulting in welding failure or only surface welding. In a partial region where the protruding current guiding structure is connected to the foil, contact resistance is effectively reduced due to concentrated pressure. The current preferentially passes through this low-resistance path established by bumps to penetrate the multi-layer foils, thereby successfully forming a main current loop, generating concentrated and effective resistance heat to achieve welding. Moreover, resistance heat is highly concentrated at the position of the current guiding structure instead of being distributed over the entire area. This prevents insecure welding caused by heat diffusion, and also prevents damage to foils in surrounding non-welding zones due to overheating, thereby improving the overall welding quality. In addition, the temperature sensing assembly of the present disclosure can sense temperature changes during welding, and provide an on-sheet disposable temperature recording tag for each welding point, achieving direct monitoring of the thermal process at each welding point.

The present disclosure further provides a welding device including the welding sheet for battery welding. By using the welding sheet, the device can improve the welding quality of products, and has a high degree of automation. When applied to welding of cylindrical batteries, the device can improve the welding quality of battery tabs and enhance the overall quality of cylindrical batteries.

### BRIEF DESCRIPTION OF THE DRAWINGS

FIG. 1 is a schematic view of a welding sheet for battery welding with a current guiding structure formed as a bump according to an embodiment of the present disclosure;
FIG. 2 is a schematic view of a welding sheet for battery welding with a current guiding structure formed as a taper according to an embodiment of the present disclosure;
FIG. 3 is a schematic view of a base material provided with a single current guiding structure according to an embodiment of the present disclosure;
FIG. 4 is a schematic view of a rough texture disposed on the current guiding structure according to an embodiment of the present disclosure;
FIG. 5 is a schematic view of a temperature sensing assembly disposed in a base material of the welding sheet according to an embodiment of the present disclosure;
FIG. 6 is a three-dimensional view of a welding device according to an embodiment of the present disclosure;
FIG. 7 is a front view of the welding device according to an embodiment of the present disclosure;
FIG. 8 is a schematic view of a tab tape winding and unwinding mechanism disposed on a frame according to an embodiment of the present disclosure;
FIG. 9 is a three-dimensional view of a battery moving mechanism according to an embodiment of the present disclosure;
FIG. 10 is a schematic view of the battery moving mechanism according to an embodiment of the present disclosure; and
FIG. 11 is a schematic view of a current flow direction during welding by the welding device according to an embodiment of the present disclosure.

Reference Numerals:
1. base material; 2. current guiding structure; 3. temperature sensing assembly; 31. temperature sensing material layer; 32. signal transmission member; 4. rough texture; 100. device body; 110. feeding mechanism; 120. transfer mechanism; 130. shaping mechanism; 140. battery moving mechanism; 1401. first guide rail; 1402. second guide rail; 1403. lifting driving cylinder; 1404. mounting base; 1405. bearing plate; 1406. clamp; 150. welding mechanism; 1501. frame; 1502. bottom electrode; 1503. top electrode; 1504. driving structure; 1505. tab tape winding and unwinding mechanism; 15051. unwinding tray; 15052. winding tray; 15053. guiding structure; 15054. end guiding roller; and 15055. tab tape.

### DETAILED DESCRIPTION OF THE EMBODIMENTS

The preferred implementations of the present disclosure will be described in more detail below with reference to the drawings. Although the preferred implementations of the present disclosure are shown in the drawings, it should be understood that the present disclosure may be implemented in various forms and should not be limited to the implementations set forth herein. On the contrary, these implementations are provided to make the present disclosure thorough and complete, and to fully convey the scope of the present disclosure to those skilled in the art.

In recent years, with the rapid development of the new energy industry, especially the power battery and energy storage fields, higher requirements have been put forward for the performance and manufacturing process of key conductive components of batteries. As a new lightweight and high-strength conductive material, a composite current collector has been widely applied in fields such as lithium batteries due to its excellent electrical conductivity, favorable mechanical properties, and light weight. For example, it is used for positive and negative electrodes of lithium batteries. The composite current collector generally adopts a sandwich structure of "metal layer (such as copper or aluminum) + polymer substrate (such as polyethylene terephthalate (PET) / polypropylene (PP) / polyimide (PI)) + metal layer", with the intermediate polymer layer functioning as support and insulation.

However, this structure brings significant challenges to multi-layer welding of tabs. Conventional tab welding processes, such as ultrasonic spot welding, laser welding or resistance welding, all have obvious bottlenecks in dealing with multi-layer composite current collectors. In particular, resistance welding and its derived pressure fusion welding process are limited by the non-conductive intermediate polymer substrate of the composite current collector. The welding current cannot penetrate the insulating layer, such that an effective current path cannot be formed between the multi-layer tabs, making it difficult to achieve reliable integrated welding.

In view of the above, the present disclosure provides a welding sheet for battery welding.

### Embodiment 1

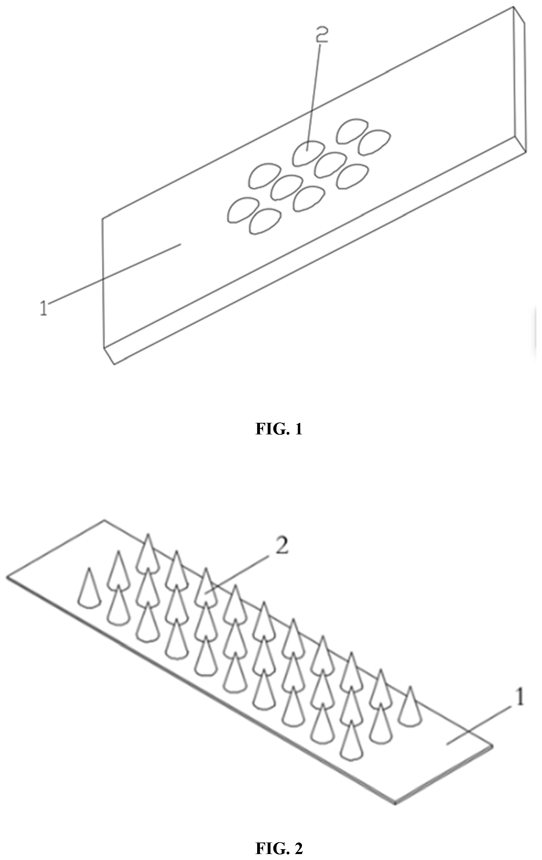

As shown in FIGS. 1 to 5, a welding sheet for battery welding provided by this embodiment includes a base material 1 made of a conductive material, and the base material 1 is electrically connected to an electrode during welding.

The base material 1 is provided with a protruding current guiding structure 2, and the current guiding structure 2 is configured to form a current path between multi-layer tabs or composite current collectors during welding. The base material 1 is further provided with a temperature sensing assembly 3, and the temperature sensing assembly 3 is configured to undergo a physical state change within a preset temperature range and output a temperature feedback signal.

Specifically, the base material 1 is made of a highly conductive material, where the base material 1 of a positive electrode welding sheet is made of pure aluminum, and the base material 1 of a negative electrode welding sheet is made of T2 copper. When the welding sheet is configured for welding of battery tabs, the thickness of the base material 1 is adaptively designed according to the number of layers of the tabs to be welded or the thickness of the composite current collector (within a conventional thickness range of 0.1-0.5 mm), ensuring the low-resistance characteristic of the base material 1 and providing a basic path for current conduction.

In an implementation, the temperature sensing assembly 3 is embedded in a non-welding zone of the base material 1 (avoiding the distribution range of the current guiding structure 2), and is made of a shape memory alloy sheet or a thermochromic material. Its preset temperature range matches the optimal temperature range for battery welding (180-250°C). If the temperature sensing assembly 3 is made of the shape memory alloy sheet, it is initially in a bent form. When the welding temperature reaches the preset lower limit (180°C), the alloy sheet recovers its shape and becomes flat, triggering a preset mechanical contact switch and outputting a feedback signal indicating that the temperature is qualified. When the temperature exceeds the preset upper limit (250°C), the alloy sheet deforms again and triggers an alarm signal. If the temperature sensing assembly 3 is made of the thermochromic material, it is initially white. It turns blue when the temperature reaches 180°C (temperature-qualified signal) and turns red when the temperature exceeds 250°C (overtemperature alarm signal), and the feedback signal can be captured through visual recognition or an optical sensor.

The welding sheet for battery welding is configured for welding of battery tabs. During the welding of multi-layer metal foil tabs, a large number of microscopic gaps and oxide films exist between layers, forming substantial accumulated contact resistance. Current applied by conventional welding electrodes is severely hindered by these interface resistances and cannot flow uniformly and effectively through all interlayer interfaces, resulting in welding failure or only surface welding. In a partial region where the protruding current guiding structure 2 is connected to the foil, contact resistance is effectively reduced due to concentrated pressure. The current preferentially passes through this low-resistance path established by bumps to penetrate the multi-layer foils, thereby successfully forming a main current loop, generating concentrated and effective resistance heat to achieve welding. Moreover, resistance heat is highly concentrated at the position of the current guiding structure 2 instead of being distributed over the entire area. This prevents insecure welding caused by heat diffusion, and also prevents damage to foils in surrounding non-welding zones due to overheating, thereby improving the overall welding quality. In addition, the temperature sensing assembly 3 of the present disclosure can sense temperature changes during welding, and provide an on-sheet disposable temperature recording tag for each welding point, achieving direct monitoring of the thermal process at each welding point.

In a specific implementation, the current guiding structure 2 is a post, a sphere or a taper protruding from a surface of the base material, and there is at least one post, sphere or taper disposed on the base material 1.

Specifically, the current guiding structure 2 of the present disclosure may be a post disposed on the base material 1, such as a round post, a square post, a polygonal post, or may be a hemispherical or spherical protruding structure disposed on the base material 1. The current guiding structure 2 may also be a pyramidal frustum, a circular frustum, or a protruding structure with a cylindrical bottom and a hemispherical top. In practical applications, current guiding structures 2 with different diameters and heights can be customized according to the number of layers of tabs to be welded, for example, cylinders and spheres with different sizes are customized according to the number of layers of tabs to be welded. The current guiding structure (such as aluminum or copper) of the present disclosure is integrally formed on the base material 1 and has excellent electrical conductivity. When the protruding current guiding structure 2 is pressed into a foil stack, at least one local, direct metal contact point is formed between the multi-layer foils to provide a current flow path. The current flow path bypasses most poor contact surfaces between the foil layers, greatly reducing the total loop resistance and allowing a sufficiently large welding current to pass through to achieve deep fusion. Therefore, the size of a single current guiding structure 2 can be customized according to the number of layers of tabs to be welded. In an implementation, a single current guiding structure 2 may have a protruding height of 0.1-3 mm and a bottom width of 0.3-2 mm.

Furthermore, the taper is a cone or a pyramid. A height of the taper is 0.1-5 mm, and a maximum bottom width of the taper is 0.3-5 mm. The core structure of the composite current collector is "metal layer + polymer insulating layer (PET/PP/PI) + metal layer", and the thickness of the intermediate insulating layer is usually 0.01-0.1 mm. The height of the taper of the present disclosure is set to 0.1-5 mm, which allows the taper to penetrate the insulating layer and make sufficient contact with the metal layers on both sides (the minimum height of 0.1 mm can cover the scenario of an ultra-thin insulating layer), and avoids excessive penetration caused by an excessive height (for example, to prevent damage to the base of the current collector or an adjacent component). The maximum bottom width of 0.3-5 mm ensures the contact area between the taper and the metal layer and reduces contact resistance to enable stable current conduction, thereby solving the problem that the insulating layer hinders current conduction in the conventional welding process.

The current guiding structure 2 is an integrated structure protruding from the surface of the base material 1, and is integrally formed with the base material 1 through milling or stamping processes to ensure the structural strength and electrical conduction continuity.

For the scenario of multi-layer tab welding, the current guiding structure 2 is configured as a bump with an arc-shaped cross-section. A positive electrode welding sheet is provided with a single bump, and a negative electrode welding sheet is provided with a plurality of bumps distributed in a centralized array (optionally 3 to 10 bumps arranged in a triangular, rectangular or spaced array). The bump has a diameter of 2-5 mm and a height of 0.3-1 mm. Through the cooperation between the bump and the welding pressure of the electrode, the contact resistance between the multi-layer tabs is reduced. The surface of the bump is subjected to texturing treatment to form a texture of a concentric circle type, a spiral type, a radial type, or a pit type, further increasing the interfacial contact resistance between the bump and the tabs and improving welding heat generation efficiency.

For the scenario of composite current collector welding, the current guiding structure 2 is configured as a cone or pyramid with a pointed tip, and the pointed tip has a height of 0.5-10 mm and a diameter of 0.2-5 mm. A plurality of pointed tips uniformly distributed in an array can penetrate the intermediate polymer insulating layer (PET/PP/PI) of the composite current collector and directly establish a current conduction path between metal layers.

Taking multi-layer tab welding of a lithium battery as an example, the specific steps of the welding process of the welding sheet are as follows:
Pretreatment: The multi-layer tabs (such as 10-30 layers of aluminum foil or copper foil tabs) are arranged flat, and are pre-pressed and positioned via a shaping fixture, and a zone for placing the welding sheet is reserved.

Assembly: The positive electrode welding sheet and the negative electrode welding sheet are correspondingly placed on positive-electrode and negative-electrode end surfaces of the tabs, ensuring that the current guiding structure 2 (bump) is in close contact with a surface of the tabs, and the temperature sensing assembly 3 is exposed outside the welding zone to facilitate signal acquisition.

Welding operation: The assembled tabs and welding sheet are placed between top and bottom electrodes of a welding device. A welding power supply cabinet is started, and a stable current is output via a transformer. The current flows through a conduction path formed by the top electrode, the multi-layer tabs, the current guiding structure 2, the base material 1, and the bottom electrode, achieving fusion welding of the tabs and the welding sheet via heat generated by contact resistance. During the welding process, a water circuit assembly may be used to provide circulating cooling for an electrode tip and the transformer, and a pneumatic circuit assembly may be used to maintain a stable electrode pressure (0.2-0.4 MPa).

During the welding process, the temperature sensing assembly 3 feeds back the temperature of the welding zone in real time. If a temperature-qualified signal is received (the shape memory alloy sheet becomes flat / the thermochromic material turns blue), the welding parameters are continuously maintained until welding is completed. If an overtemperature alarm signal is received (the shape memory alloy sheet deforms for a second time / the thermochromic material turns red), the welding power supply cabinet automatically adjusts the output current or cuts off the power supply to avoid overtemperature damage to the tabs or battery materials.

In a specific implementation, the temperature sensing assembly 3 includes a temperature sensing material layer 31 and a signal transmission member 32, and the temperature sensing material layer 31 is made of a low-melting alloy or a thermochromic polymer material;

A side of the temperature sensing material layer 31 is connected to the current guiding structure 2, and the opposite side thereof is connected to the signal transmission member 32. The signal transmission member 32 is a conductive coating. A side of the signal transmission member 32 abuts against the temperature sensing material layer 31, and the opposite side thereof is electrically connected to the external welding device.

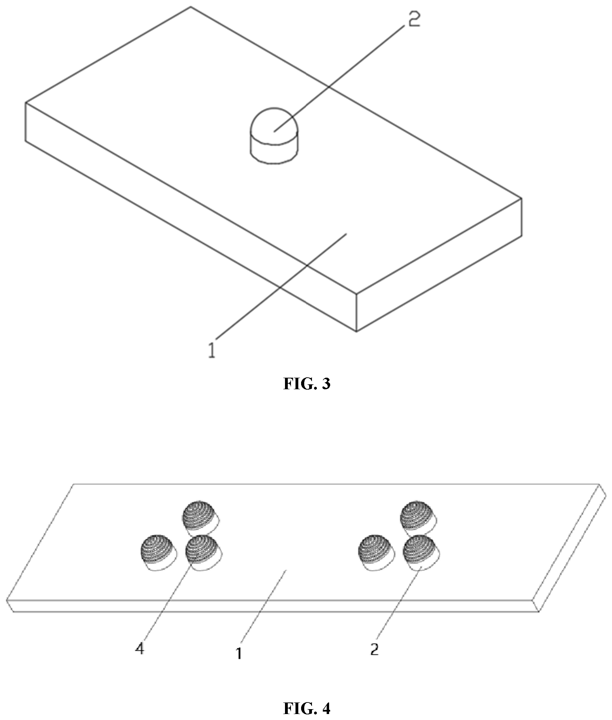

Referring to FIG. 4, furthermore, the surface of the current guiding structure 2 is provided with a rough texture 4, and the rough texture 4 includes any one or a combination of a concentric circle type, a spiral type, a radial type, and a pit type.

The rough texture 4 on the surface of the current guiding structure 2 increases the interfacial contact area and contact resistance with the foil. In combination with the structural design of the bump/pointed tip, this design reduces the contact resistance between the multi-layer tabs to ensure smooth current conduction, and improves interface heat generation efficiency such that welding heat is concentrated in the fusion zone, thereby shortening the welding time. Compared with a texture-free design, the texture-based design improves the welding strength, and effectively avoids any cold joint or false joint. The multi-type combined design of the rough texture 4 adapts to different welding scenarios. For example, a combination texture of concentric circle type and pit type can retain the advantage of uniform pressure distribution of the concentric circle type texture, and enhance the interface friction through the pit type texture to prevent relative sliding between the connecting sheet and the foil during welding, making it especially suitable for multi-layer tab welding. A combination texture of spiral type and radial type can further improve the uniformity of heat distribution during welding of composite current collectors and avoid local overheating.

### Embodiment 2

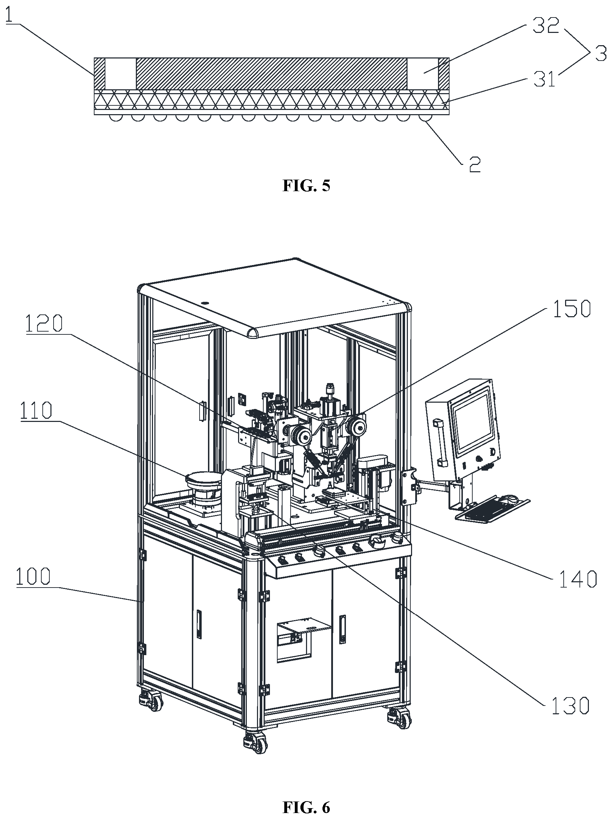

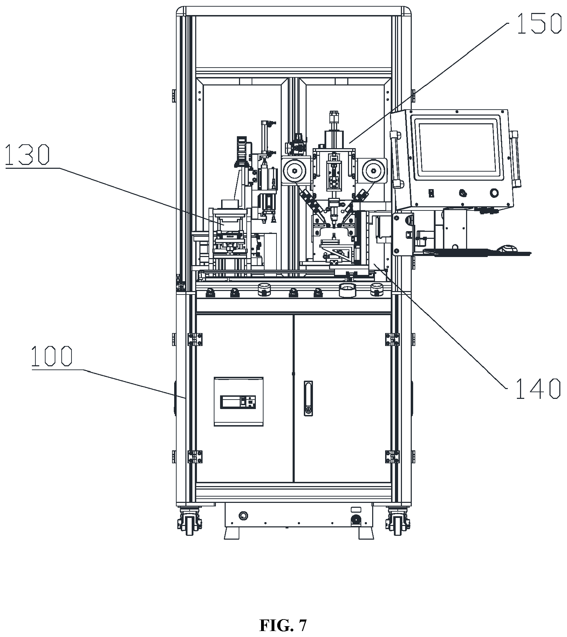

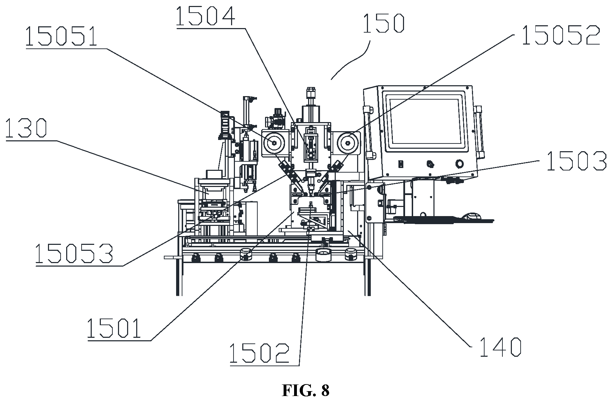

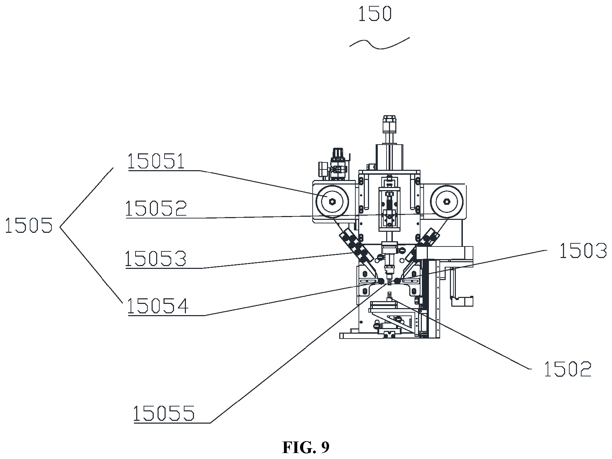

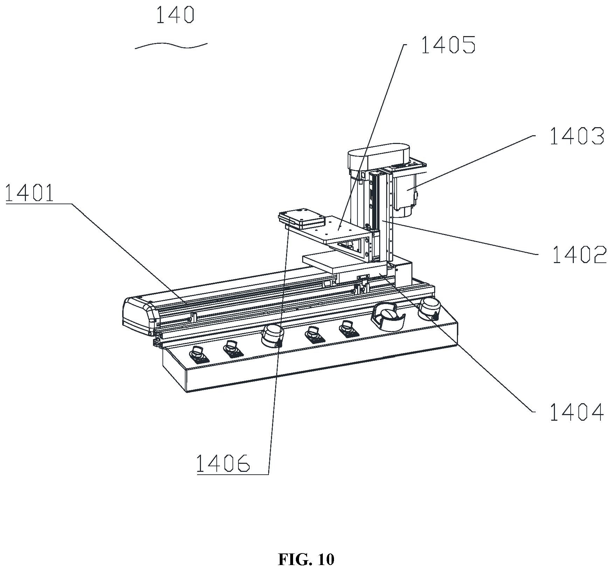

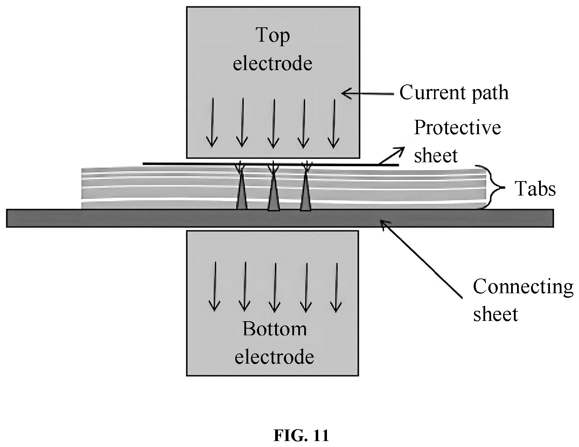

As shown in FIGS. 6 to 11, this embodiment provides a welding device, including a device body 100. The device body 100 is provided with a feeding mechanism 110, a transfer mechanism 120, a shaping mechanism 130, and a welding mechanism 150.

The feeding mechanism 110 includes a vibrating feeding tray, the vibrating feeding tray is configured to accommodate the welding sheet for battery welding.

The shaping mechanism 130 is located on a side of the feeding mechanism 110 and is configured to shape battery tabs.

The transfer mechanism is configured to place the welding sheet on the welding mechanism 150, such that the welding mechanism 150 welds the battery tabs via the welding sheet.

Specifically, the welding mechanism 150 includes a frame 1501, a top electrode 1503, a bottom electrode 1502, and a driving structure 1504. The frame 1501 is fixed to the device body 100, the bottom electrode 1502 is fixed to a side of the frame 1501, the driving structure 1504 is disposed on the frame 1501, the top electrode 1503 is disposed above the bottom electrode 1502, the top electrode 1503 is fixedly connected to an output end of the driving structure 1504, and the driving structure 1504 is configured to drive the top electrode 1503 to move vertically above the bottom electrode 1502. Specifically, the shape of opposite surfaces of the top electrode 1503 and the bottom electrode 1502 matches a positioning groove of the bottom electrode 1502, and the driving structure 1504 drives the top electrode 1503 to move accurately in a vertical direction to achieve pressing and welding of the welding sheet and the tabs.

Furthermore, the frame 1501 is further provided with a tab tape winding and unwinding mechanism 1505. The tab tape winding and unwinding mechanism 1505 includes an unwinding tray 15051, a winding tray 15052, guiding structures 15053, and end guiding rollers 15054. The unwinding tray and the winding tray are disposed opposite to each other on two sides of the driving structure 1504. There are two end guiding rollers 15054, and the two end guiding rollers 15054 are disposed below the driving structure 1504.

There are two guiding structures 15053 disposed on the frame 1501, and the two guiding structures 15053 are respectively disposed between the unwinding tray 15051 and one end guiding roller 15054 and between the winding tray 15052 and the other end guiding roller 15054.

The unwinding tray 15051 is provided with a tab tape 15055, and an end of the tab tape 15055 sequentially passes through one guiding structure 15053, the two end guiding rollers 15054, and the other guiding structure 15053 to extend into the winding tray 15052.

Furthermore, the device body 100 is further provided with a battery moving mechanism 140, and the battery moving mechanism 140 includes a driving system, a bearing plate 1405, and a clamp 1406.

The driving system includes a first guide rail 1401, a mounting base 1404, a second guide rail 1402, and a lifting driving cylinder 1403. The first guide rail 1401 is disposed between the shaping mechanism 130 and the welding mechanism 150. The mounting base 1404 is movably disposed on the first guide rail 1401. The second guide rail 1402 is vertically fixed to the mounting base 1404. The lifting driving cylinder 1403 is disposed on a side of the second guide rail 1402. The bearing plate 1405 is disposed on the second guide rail 1402. The clamp 1406 is detachably disposed on the bearing plate 1405. The lifting driving cylinder 1403 is configured to drive the bearing plate 1405 to move vertically along the second guide rail 1402.

The welding process of the tabs by the device is as follows:
A batch of positive/negative electrode welding sheets to be welded is placed into the vibrating feeding tray. The tab tape 15055 is mounted onto the unwinding tray 15051, and tape routing is completed. A battery to be welded is fixed to the clamp 1406 of the battery moving mechanism 140.

The driving system of the battery moving mechanism 140 drives the mounting base 1404 to move along the first guide rail 1401 to a position above the shaping mechanism 130. The lifting driving cylinder 1403 drives the bearing plate 1405 to descend, such that the battery tabs are aligned with a lower shaping die. A shaping driving cylinder drives an upper shaping die to press down to perform prepressing shaping on the tabs for 10-15 s. After stacked gaps are eliminated, the upper shaping die resets.

The vibrating feeding tray conveys the welding sheets in order to a tail end of a discharging guide rail through vibration. A pneumatic gripper of the transfer mechanism 120 clamps the welding sheet, a transverse moving module drives the pneumatic gripper to move to a position above the positioning groove of the bottom electrode 1502 of the welding mechanism 150, and the welding sheet is accurately placed into the positioning groove.

The battery moving mechanism 140 drives the mounting base 1404 to move along the first guide rail 1401 to the welding mechanism 150, the lifting driving cylinder 1403 drives the bearing plate 1405 to descend, the shaped tabs are placed onto the welding sheet of the bottom electrode 1502, and the clamp 1406 keeps the battery fixed to ensure accurate alignment between the tabs and the welding sheet.

The tab tape winding and unwinding mechanism 1505 is started, and the winding tray 15052 drives the tab tape 15055 to move to the welding zone while the tab tape is in contact with the upper surface of the tabs. The driving structure 1504 drives the top electrode 1503 to descend, pressing the tabs and the welding sheet between the bottom electrode 1502 and the top electrode 1503. The welding power supply cabinet outputs a current to the top electrode 1503 and the bottom electrode 1502 via the transformer, and the current flows through the conduction path formed by the top electrode 1503, the tabs, the current guiding structure 2 of the welding sheet, and the bottom electrode 1502, achieving fusion welding of the tabs and the welding sheet via heat generated by contact resistance. During the welding process, a water circuit assembly may be used to provide circulating cooling for the top electrode 1503, the bottom electrode 1502, and the transformer. The temperature sensing assembly 3 feeds back a temperature signal in real time, and a control system automatically adjusts the current or stops the welding process if the temperature is abnormal.

After welding is completed, the top electrode 1503 resets, the tab tape winding and unwinding mechanism 1505 recycles the used tape, the battery moving mechanism 140 drives the bearing plate 1405 to rise and move to an unloading zone along the first guide rail 1401, the clamp 1406 is released to complete battery unloading. Each mechanism resets and enters a next welding cycle.

Unless otherwise specified, the relative arrangement, numerical expressions, and numerical values of components and steps set forth in these embodiments do not limit the scope of the present disclosure. Meanwhile, it should be understood that for ease of description, each portion in the drawings is not necessarily drawn to the actual scale. The technologies, methods, and equipment known to those of ordinary skill in the art may not be discussed in detail, but where appropriate, the technologies, methods, and equipment should be regarded as part of the authorized specification. In all examples shown and discussed herein, any specific value should be interpreted as merely exemplary, rather than restrictive. Therefore, other examples of the exemplary embodiments may have different values. It should be noted that similar reference signs and letters represent similar items in the drawings below. Therefore, once an item is defined in one drawing, it does not need to be further discussed in subsequent drawings. It should be understood that, in the description of the present disclosure, terms such as "front", "rear", "upper", "lower", "left", "right", "transverse", "longitudinal", "vertical", "horizontal", "top" and "bottom" indicate orientation or position relationships based on the accompanying drawings. Unless otherwise specified, these terms are merely intended to facilitate or simplify the description of the present disclosure, rather than to indicate or imply that the mentioned device or components must have a specific orientation and must be constructed and operated in a specific orientation. Therefore, they should not be construed as a limitation to the protection scope of the present disclosure. The orientation terms "inner" and "outer" refer to the inner and outer parts relative to the contour of the mentioned component.

For ease of description, spatially relative terms, such as "above", "on the upper side of", "on the upper surface of" and "on", can be used to describe the spatial positional relationship between components or features shown in the figure. It should be understood that the spatially relative terms are intended to encompass different orientations of the components in use or operation in addition to those shown in the figure. For example, if a component in the figure is inverted, it is described as a component "above other component or structure" or "on other component or structure". Therefore, the component will be positioned as "below other component or structure" or "under other component or structure". Therefore, the exemplary term "above" may include both orientations "above" and "below". The component may also be positioned in other different ways (rotated by 90 degrees or in other orientations), but the relative description of the space should be explained accordingly.

In addition, it needs to be noted that the use of such words as "first" and "second" to define components is merely intended to distinguish the corresponding components. Unless otherwise stated, such words have no special meaning and thus cannot be construed as limiting the protection scope of the present disclosure. The above described are merely preferred embodiments of the present disclosure and are not intended to limit the present disclosure, and various changes and modifications of the present disclosure may be made by those skilled in the art.

## Claims

1. A welding sheet for battery welding, comprising:
a base material made of a conductive material, wherein the base material is electrically connected to an electrode during welding;
the base material is provided with a protruding current guiding structure; the current guiding structure is configured to form a current path between multi-layer tabs or composite current collectors during welding; the base material is further provided with a temperature sensing assembly; and the temperature sensing assembly is configured to undergo a physical state change within a preset temperature range and output a temperature feedback signal;
the current guiding structure is a post, a sphere or a taper protruding from a surface of the base material; at least one post, sphere or taper is disposed on the base material; the taper is a cone or a pyramid; and the taper has a height of 0.1-5 mm and a maximum bottom width of 0.3-5 mm;
the temperature sensing assembly comprises a temperature sensing material layer and a signal transmission member; and the temperature sensing material layer is made of a low-melting alloy or a thermochromic polymer material;
a side of the temperature sensing material layer is connected to the current guiding structure, and an opposite side of the temperature sensing material layer is connected to the signal transmission member; the signal transmission member is a conductive coating; and a side of the signal transmission member abuts against the temperature sensing material layer, and an opposite side of the signal transmission member is electrically connected to an external welding device; and
a surface of the current guiding structure is provided with a rough texture; and the rough texture comprises any one or a combination of a concentric circle type, a spiral type, a radial type, and a pit type.

2. A welding device, comprising: a device body, wherein the device body is provided with a feeding mechanism, a transfer mechanism, a shaping mechanism, and a welding mechanism;
the feeding mechanism comprises a vibrating feeding tray; and the vibrating feeding tray is configured to accommodate the welding sheet for battery welding according to claim 1;
the shaping mechanism is located on a side of the feeding mechanism and is configured to shape a battery tab; and
the transfer mechanism is configured to place the welding sheet on the welding mechanism, whereby the welding mechanism welds the battery tab via the welding sheet.

3. The welding device according to claim 2, wherein
the welding mechanism comprises a frame, a top electrode, a bottom electrode, and a driving structure; the frame is fixed to the device body; the bottom electrode is fixed to a side of the frame; the driving structure is disposed on the frame; the top electrode is disposed above the bottom electrode, the top electrode is fixedly connected to an output end of the driving structure; and the driving structure is configured to drive the top electrode to move vertically above the bottom electrode.

4. The welding device according to claim 3, wherein
the frame is further provided with a tab tape winding and unwinding mechanism; the tab tape winding and unwinding mechanism comprises an unwinding tray, a winding tray, guiding structures, and end guiding rollers; the unwinding tray and the winding tray are disposed opposite to each other on two sides of the driving structure; two end guiding rollers are provided; and the two end guiding rollers are disposed below the driving structure;
two guiding structures are disposed on the frame; and the two guiding structures are respectively disposed between the unwinding tray and one end guiding roller and between the winding tray and the other end guiding roller; and
the unwinding tray is provided with a tab tape; and one end of the tab tape sequentially passes through one guiding structure, the two end guiding rollers, and the other guiding structure to extend into the winding tray.

5. The welding device according to claim 3, wherein
the device body is further provided with a battery moving mechanism; and the battery moving mechanism comprises a driving system, a bearing plate, and a clamp; and
the driving system comprises a first guide rail, a mounting base, a second guide rail, and a lifting driving cylinder; the first guide rail is disposed between the shaping mechanism and the welding mechanism; the mounting base is movably disposed on the first guide rail; the second guide rail is vertically fixed to the mounting base; the lifting driving cylinder is disposed on a side of the second guide rail; the bearing plate is disposed on the second guide rail; the clamp is detachably disposed on the bearing plate; and the lifting driving cylinder is configured to drive the bearing plate to move vertically along the second guide rail.
